**Europäisches Patentamt**

**European Patent Office**

**Office européen des brevets**

(19)

(11) Veröffentlichungsnummer: **0 030 952 B1**

(12) **EUROPÄISCHE PATENTSCHRIFT**

(45) Veröffentlichungstag der Patentschrift:
**27.06.84**

(51) Int. Cl.³: **B 60 R 9/04**, B 60 R 9/12

(21) Anmeldenummer: **80901195.0**

(22) Anmeldetag: **27.06.80**

(86) Internationale Anmeldenummer:
**PCT/DE 80/00092**

(87) Internationale Veröffentlichungsnummer:
**WO 81/00087 (22.01.81 Gazette 81/2)**

(54) **BEFESTIGUNGSVORRICHTUNG FÜR TRAGBÜGEL ODER GEPÄCKTRÄGER FÜR KRAFTFAHRZEUGE.**

(30) Priorität: **27.06.79 DE 2925994**

(43) Veröffentlichungstag der Anmeldung:
**01.07.81 Patentblatt 81/26**

(45) Bekanntmachung des Hinweises auf die Patenterteilung:
**27.06.84 Patentblatt 84/26**

(84) Benannte Vertragsstaaten:
**AT CH FR LI**

(56) Entgegenhaltungen:
**CH - A - 428 463**
**DE - A - 2 619 815**
**DE - U - 7 901 495**
**FR - A - 2 395 863**
**FR - A - 2 437 324**
**US - A - 3 525 461**
**US - A - 3 601 294**
**US - A - 3 638 844**

(73) Patentinhaber: **HEINRICH WUNDER GMBH & CO. KG,
Postfach 1920, D-8060 Dachau (DE)**

(72) Erfinder: **ZOOR, Reinhold, Schillerstrasse 18,
D-8060 Dachau (DE)**

(74) Vertreter: **Zmyj, Erwin, Dipl.-Ing., Postfach 95 04 28,
D-8000 München 95 (DE)**

**Beschreibung**

Die Erfindung bezieht sich auf eine Befestigungsvorrichtung der im Oberbegriff des Anspruchs 1 angegebenen Art.

Bei einer bekannten Befestigungsvorrichtung dieser Art (DE-U-7 807 135) ist die Schutzkappe abklappbar und entfernbar an der Klemmkralle befestigt und ist durch den Schloßriegel eines an der Schutzkappe befestigten Schlosses insofern mit der Klemmkralle verbindbar, als der Schloßriegel in der Sperrstellung des Schlosses in einen Schlitz der Klemmkralle eingreift, so daß die Schutzkappe ohne Betätigung des Schlosses nicht mehr abgenommen werden kann. Hierdurch ist die Spannschraube, welche die Klemmkralle gegen die Dachrinne und gegen den Stützfuß spannt, nicht mehr zugänglich, so daß der Stützfuß diebstahlsicher an der Dachrinne eines Kraftfahrzeuges befestigt werden kann.

Nachteilig bei dieser bekannten Ausgestaltung ist die Tatsache, daß die Schutzkappe zur Betätigung der Spannschraube abgenommen werden muß und dann ein von der Klemmkralle losgelöstes Teil bildet, das nach dem Befestigen des Tragbügels an der Dachrinne wieder angesetzt werden muß. Dies ist nicht nur umständlich, sondern es besteht auch die Möglichkeit, daß die Schutzkappe verlorengeht, wenn sie bei abgenommenem Tragbügel nicht an die die Klemmkralle angeschlossen wird.

Aufgabe der Erfindung ist es eine Befestigungsvorrichtung der im Oberbegriff des Anspruchs 1 angegebenen Art so auszugestalten, daß die Bedienung erleichtert und ein Verlieren der Schutzkappe in allen Gebrauchslagen ausgeschlossen ist.

Diese Aufgabe wird ausgehend von der Befestigungsvorrichtung der eingangs erläuterten Art erfindungsgemäß dadurch gelöst, daß die Schutzkappe mit der Klemmkralle zumindest von außen unlösbar verbunden ist und eine Montageöffnung für die Spannschraube aufweist und daß der Schloßriegel in der Sperrstellung die Montageöffnung überdeckt.

Durch die Verbindung der Schutzkappe mit der Klemmkralle in der Weise, daß sie bestenfalls nur von der Innenseite her, also bei von der Dachrinne abgenommenem Tragbügel oder Gepäckträger gelöst werden kann und in Verbindung mit der Tatsache, daß eine Montageöffnung in der Schutzkappe vorgesehen ist, wird erreicht, daß nur die Montageöffnung durch Aufsperren der Absperrvorrichtung freigegeben werden muß, um die Spannschraube betätigen zu können. Ein Abnehmen der Schutzkappe ist nicht notwendig und auch nicht möglich. Hierdurch ist es auch nicht möglich, daß die Schutzkappe bei abgenommenem Tragbügel oder Gepäckträger verlegt werden kann und damit im Gebrauchsfalle nicht mehr auffindbar ist. Die Schutzkappe ist also in allen Gebrauchslagen unverlierbar mit dem Tragbügel oder dem Gepäckträger verbunden.

Die Schutzkappe kann mit der Klemmkralle verschweißt oder vernietet sein oder es ist grundsätzlich auch möglich, die Schutzkappe lösbar an der Klemmkralle zu befestigen, wofür die Schutzkappe an einem Ende eine abgekröpfte Zunge aufweist, die in einen Schlitz der Klemmkralle einführbar ist und an dem gegenüberliegenden Ende mit einer nach innen gebogenen Lasche versehen ist, die von der Innenseite der Klemmkralle aus durch eine Schraubverbindung mit dieser verbindbar ist. Durch die zuletzt erläuterte Ausgestaltung besteht zwar grundsätzlich die Möglichkeit, die Schutzkappe von der Klemmkralle zu lösen, jedoch nur dann, wenn der Tragbügel oder der Gepäckträger nicht auf dem Autodach angeordnet ist. Im normalen Gebrauchszustand des Tragbügels oder des Gepäckträgers ist die Schraubverbindung durch die Klemmkralle einerseits und den Stützfuß andererseits abgedeckt, so daß die Schutzkappe nicht abgenommen werden kann.

Die Erfindung ist in der Zeichnung beispielsweise dargestellt. In dieser zeigt

Fig. 1 eine schaubildliche Ansicht des unteren Teils eines Stützfußes eines Tragbügels oder Gepäckträgers mit einer gegen unbefugtes Öffnen gesicherten Befestigungsvorrichtung, und

Fig. 2 einen Schnitt nach der Linie II-II in Fig. 1.

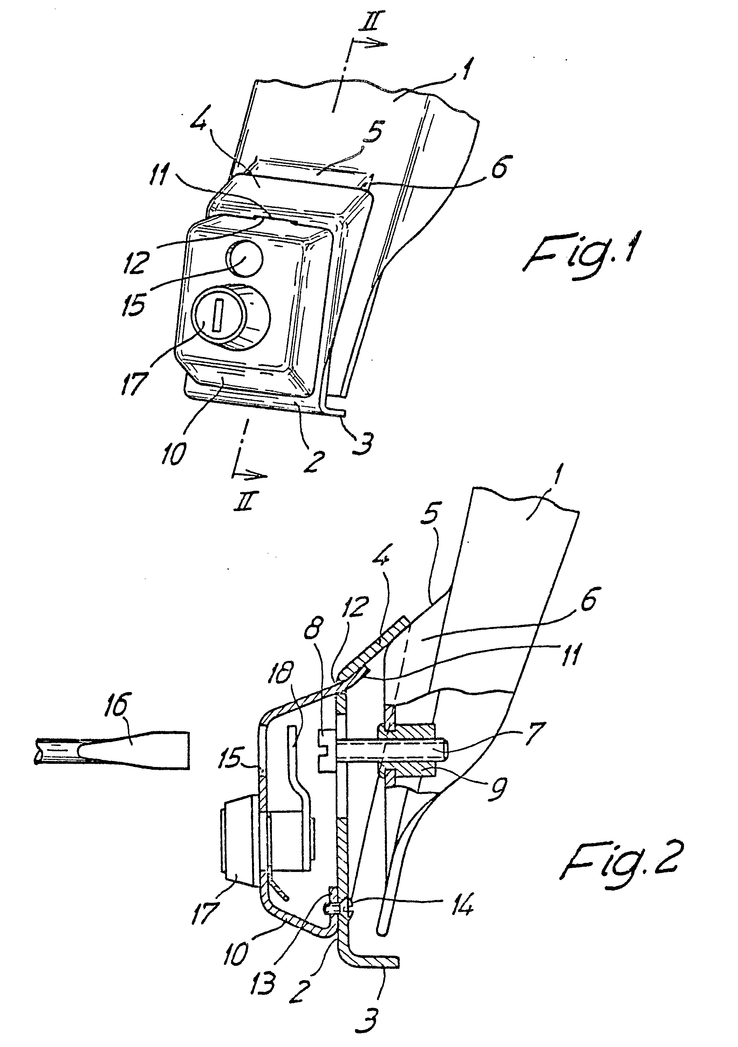

In der in der Zeichnung dargestellten Ausführungsform ist zur Befestigung eines Stützfußes 1 an der Dachrinne eines Kraftfahrzeuges, in welche dieser Stützfuß 1 eingesetzt wird, eine Klemmkralle 2 vorgesehen, die mit einem Hakenteil 3 unter die Dachrinne faßt und mit ihrem oberen schrägen Teil 4 auf einer Schrägfläche 5 aufruht, die durch einen Höcker 6 des Stützfußes 1 gebildet ist.

Die Klemmkralle 2 ist mittels einer Spannschraube 7 gegen den Stützfuß 1 andrückbar. Hierfür greift die Spannschraube 7 in eine Mutter 9 ein, die im Höcker 6, der durch eine Auswölbung des Stützfußes 1 gebildet ist, drehsicher befestigt ist. Zur Abdeckung der Spannschraube 7, insbesondere ihres z. B. mit einem Schlitz versehenen Kopfes 8, dient eine Schutzkappe 10, die an ihrem oberen Ende eine abgekröpfte Zunge 11 aufweist, welche in einen Schlitz 12 der Klemmkralle 2 eingreift. An ihrem unteren Ende ist die Schutzkappe 10 mit einer nach innen abgebogenen Lasche 13 versehen, die mittels einer Schraube 14 von der Innenseite der Klemmkralle 2 aus mit dieser verbunden ist. Die Schutzkappe 10 kann deshalb in der Gebrauchsstellung der Klemmkralle 2, d. h. wenn sich diese an der Dachrinne und dem Stützfuß 1 befindet, nicht mehr entfernt werden.

Eine in der Schutzkappe vorgesehene Montageöffnung 15 gestattet es, beispielsweise mittels eines Schraubenziehers 16 die Spannschraube 7 zu betätigen. Unterhalb der Montageöffnung 15 ist ein Schloß 17 in die Schutzkappe 10 eingesetzt, dessen schwenkbarer Schloßriegel 18 in der Sperrstellung die Montageöffnung von innen her abdeckt, so daß die Spannschraube 7 durch den Schraubenzieher 16 nicht mehr erreichbar ist.

## Patentansprüche

1. Befestigungsvorrichtung für Tragbügel oder Gepäckträger für Kraftfahrzeuge, mit in die Dachrinne einsetzbaren Stützfüßen (1) und mindestens einer die Dachrinne umgreifenden Klemmkralle (2), die gegen den Stützfuß (1) und die Dachrinne mittels mindestens einer Spannschraube (7) spannbar und gegen unbefugtes Lösen durch eine mit einem Schloß (17) versehene Schutzkappe (10) gesichert ist, die die Klemmkralle (2) im Bereich der Spannschraube (7) abdeckt, dadurch gekennzeichnet, daß die Schutzkappe (10) mit der Klemmkralle (2) zumindest von außen unlösbar verbunden ist und eine Montageöffnung (15) für die Spannschraube (7) aufweist und daß der Schloßriegel (18) in der Sperrstellung die Montageöffnung (15) überdeckt.

2. Befestigungsvorrichtung nach Anspruch 1, dadurch gekennzeichnet, daß die Schutzkappe (10) mit der Klemmkralle (2) verschweißt oder vernietet ist.

3. Befestigungsvorrichtung nach Anspruch 1, dadurch gekennzeichnet, daß die Schutzkappe (10) an einem Ende eine abgekröpfte Zunge (11) aufweist, die in einen Schlitz (12) der Klemmkralle (2) einführbar ist und an dem gegenüberliegenden Ende mit einer nach innen gebogenen Lasche (13) versehen ist, die von der Innenseite der Klemmkralle aus durch eine Schraubverbindung (14) mit dieser verbindbar ist.

## Claims

1. Fastening device for supporting brackets or luggage racks for automotive vehicles, with supporting feet which can be inserted into the roof gutter and at least one clamping claw which surrounds the roof gutter, which can be biased against the supporting foot and roof gutter by at least one tensioning screw and is secured against unauthorized detachment by a protecting cap which is provided with a locking device and which covers the clamping claw in the region of the tensioning screw, characterized in that the protecting cap (10) is non-separably connected with the clamping claw (2), at least from the outside, and is provided with a mounting aperture (15) for the tensioning screw (7) and in that the locking bolt (18) closes the mounting aperture (15) in the locking position thereof.

2. Fastening device according to claim 1, characterized in that the protecting cap (10) is welded or riveted to the clamping claw (2).

3. Fastening device according to claim 1, characterized in that one end of the protecting cap (10) comprise a bent-over tongue (11) which can be introduced into a slot (12) of the clamping claw (2) and that the opposite end of the protecting cap is provided with an inwardly bent lug (13) which is connected with the clamping claw by a screw connection (14) from the inner side of the clamping claw.

## Revendications

1. Dispositif de fixation pour étriers supports ou galeries de voitures, comprenant des pieds (1) à placer dans la gouttière et au moins un crampon (2) entourant la gouttière, qui peut être fixé au pied (1) et à la gouttière à l'aide d'au moins une vis de serrage (7) et qui est protégé contre le détachement non autorisé par un capot protecteur (10), muni d'une serrure (17), qui recouvre le crampton (2) dans la région de la vis de serrage (7), caractérisé en ce que le capot (10) est relié au crampon (2) de manière indétachable, du moins de l'extérieur, et présente une ouverture de montage (15) permettant d'accéder à la vis de serrage (7), et que le pêne (18) de la serrure recouvre cette ouverture de montage à la position de verrouillage.

2. Dispositif de fixation selon la revendication 1, caractérisé en ce que le capot protecteur (10) est soudé ou rivé au crampon (2).

3. Dispositif de fixation selon la revendication 1, caractérisé en ce que le capot protecteur (10) présente à une extrémité une languette repliée (11), qui peut être introduite dans une fente (12) du crampon (2), et, à l'extrémité opposée, une patte (13) recourbée vers l'intérieur et qui peut être reliée au crampon (2) depuis le côté intérieur de celui-ci, par un assemblage à vis (14).

0 030 952

Fig.1

Fig.2

5